# DEMANDE DE BREVET EUROPEEN

(11) **EP 2 128 115 A1**
(43) Date de publication de la demande: **02.12.2009**
(21) Numéro de dépôt: 09160210.2
(22) Date de dépôt: 14.05.2009
(51) Int. Cl.: C05F 11/04, C05F 17/00

(54) **Sols anthropogéniques dits "terra preta".**

(30) Priorité: 29.05.2008 FR 0853527
(71) Demandeur: Carlin, M. Michel, 06390 Chateauneuf-Villeveille (FR)
(72) Inventeur: Carlin, M. Michel, 06390 Chateauneuf-Villeveille (FR)
(74) Mandataire: Dossmann, Gérard

(57) **Abrégé**

La présente invention est relative à un procédé de préparation de sols anthropogéniques afin de fournir un terreau fertile. Le procédé de préparation comportant les étapes suivantes:
- on procède au mélange de charbon de bois, sucre et acide phosphorique
- on ajoute, pour un volume de mélange, de 10 à 100 volumes de tourbe ou compost en maintenant une humidité constante.

## Description

La présente invention est relative à un procédé de préparation de sols anthropogéniques afin de fournir un terreau fertile.

La terre noire (*terra preta* en Portugais) est un sol anthropogénique (c'est-à-dire d'origine humaine) d'une fertilité exceptionnelle due à des concentrations particulièrement élevées en charbon de bois, matière organique et nutriments tels que azote (N), phosphore (P), potassium (K), et calcium (Ca). Il contient aussi une quantité remarquable de tessons de poterie et l'activité micro-organique y est des plus développées.

Ce sol a été créé par l'homme entre 7000 et 500 avant le présent et est d'origine précolombienne. On trouve ce sol principalement en Amazonie, le long des voies d'eau, de l'Amazonie de l'est au bassin central de l'Amazonie ("Nutrient availability and leaching in an archaeological Anthrosol and a Ferralsol of the Central Amazon basin: fertilizer, manure and charcoal amendments", J. Lehmann, J. Pereira da Silva Jr., C. Steiner, T. Nehls, W. Zech & Bruno Glaser. Plant and Soil 249: 343-357, 2003).

On connait également des sites de terra preta dans d'autres régions d'Amérique du Sud (Equateur, Pérou, Guyane), en Afrique de l'Ouest (Bénin, Libéria), et dans les savanes d'Afrique du Sud.

Des milliers d'années après sa création, ce sol est si réputé au Brésil qu'il est récolté et vendu comme terreau à poter. Sa profondeur peut aller jusqu'à 2 mètres ("The timing of Terra Preta formation in the central Amazon: new data from three sites in the central Amazon", E.G. Neves, R.N. Bartone, J.B. Petersen & M.J. Heckenberger. 2001 p. 10).

La terra preta existe généralement en petites surfaces avoisinant 20 hectares, mais des surfaces de 350 hectares ont aussi été reportées. On les trouve dans des situations climatiques, géologiques et topographiques variées ("B. Glaser., et al. "Amazonian Dark Earths: Origins, Properties, Management").

Les étendues de terra preta sont généralement entourées de sols infertiles, principalement les oxisols (sols riches en oxyde de fer libre), mais aussi Ferralsols (sols composés de kaolinite et quartz, enrichi en oxydes de fer et d'aluminium), Acrisols (sols acides enrichis en argile) et Arénosols (sols sablonneux ou possédant la texture du sable loameux) ("Prehistorically modified soils of central Amazonia: a model for sustainable agriculture in the twenty-first century", Bruno Glaser, Philosophie Transactions Royal Society B (2007) 362, 187-19).

La Terra Preta est définie comme un type de latosol (sol riche en fer, aluminium ou silice) présentant un taux de carbone élevé (plus de 13-14 % de matière organique).

Bien qu'on ne connaisse pas exactement son mode de fabrication par les précolombiens, la terra preta doit sa formation à :
1. L'incorporation de charbon de bois
2. L'incorporation de matières organiques et de nutriments
3. Le rôle des micro-organismes et des animaux du sol

La transformation de la biomasse en charbon produit une série de dérivés charbonneux désignés sous le nom de carbone noir ou pyrogénique, dont la composition varie; (Hedges et al. Org. Geochem. 2000"The molecularly uncharacterized component of nonliving organic matter in natural environments Vol 31, 945-958). Par convention, est considérée comme charbon la matière organique naturelle transformée thermiquement avec un pourcentage O/C de moins de 0.6.

La structure chimique du charbon dans les sols de terra preta est caractérisée par des groupes aromatiques poly-condensés, à qui sont dûs, d'une part, la stabilité biologique et chimique prolongée combattant la dégradation microbienne, et d'autre part, après oxydation partielle, la plus grande rétention de nutriments.

En fait, la formation de structures aromatiques condensées dépend du processus de manufacture du charbon. C'est l'oxydation lente du charbon qui crée des groupes carboxyliques. Ceux-ci augmentent la capacité d'échange des cations dans le sol. Le noyau des particules de carbone noir produit par la biomasse a été étudié et trouvé hautement aromatique même après des milliers d'années d'exposition dans le sol et présentant les caractéristiques spectrales du charbon frais (J. Lehmann et al., Plant and Soils 2003 "Nutrient availability and leaching in an archaeological Anthrosol and a Ferralsol of the Central Amazon basin: fertilizer, manure and charcoal amendments", vol 249: 343-357.)

La porosité du charbon de bois amène une plus grande rétention de matière organique, d'eau et de nutriments organiques dissous. Les sols de terra preta, contenant ces grandes quantités de charbon, sont donc également caractérisés par une plus grande concentration de matière organique (en moyenne trois fois plus de matière organique que dans les sols pauvres environnants), jusqu'à 150 g/kg de terre.

Les sols de terra preta montrent aussi des quantités de nutriments plus élevées et une meilleure rétention de ces nutriments, que les sols environnants infertiles.

La terra preta montre une disponibilité de P, Ca, Mn, et Zn clairement plus élevée que le Ferralsol voisin. Pour les sources potentielles de nutriments, seuls le carbone (via photosynthèse) et l'azote (par fixation biologique) peuvent être produits *in situ*. Tous les autres éléments (P, K, Ca, Mg, etc) doivent être présents dans le sol. La proportion de phosphore présent atteint par exemple 200-400 mg/kg.

Les microbes et champignons (myco-organismes) vivent et meurent à l'intérieur du média poreux, augmentant ainsi sa quantité de carbone.

Le sol de terra preta présente une fertilité exceptionnelle. La productivité des récoltes dans la terra preta est de deux à trois fois celle des sols voisins infertiles. Les jachères y sont réduites parfois seulement à six mois, alors que celles pour l'oxisol sont généralement de 8 à 10 ans. De nombreuses études au Brésil, Thaïlande, Japon et bien d'autres, ont montré des accroissements de productivité des récoltes de l'ordre de 20 à 50%, associés à des accroissements de biomasse totale allant jusqu'à 280%. De plus, ce sol est auto régénérant car la terra preta, bien que fabriquée par l'homme il y a plusieurs milliers d'années, est toujours aussi fertile de nos jours, ce qui dispense d'un apport d'engrais.

Différentes méthodes ont été utilisées pour essayer de recréer de la terra preta. Transformer les arbres en charbon (composé quasi uniquement de carbone) et enterrer ce charbon, n'est pas efficace. Le défrichage par brûlis relâche dans l'atmosphère environ 97% du carbone accumulé par la végétation. Par contre, le défrichage avec feux couverts pour la production de charbon ne relâche qu'environ 50% de ce carbone.

La société IDEASOL utilise les propriétés des terres peu fertiles (extraites lors de chantiers de bâtiment) pour fabriquer du compost, en mélangeant ces terres avec des boues de stations d'épuration et du carbone végétal.

Cependant, il subsiste le besoin de pouvoir recréer ces sols anthropogéniques à grande échelle.

La demanderesse a mis au point un nouveau procédé de fabrication de sol dont les caractéristiques sont celles de la "terra preta", qui constitue l'objet de l'invention.

D'autres objets apparaîtront à la lecture de la description et des exemples qui suivent.

La demanderesse a ainsi trouvé de façon surprenante qu'en mélangeant du charbon de bois, un sucre et un acide phosphorique dans des conditions appropriées, on obtenait un sol aux propriétés identiques à celles de la "terra preta".

Pour obtenir le sol anthropogénique selon l'invention, sol dit "terra preta", on procède au mélange de charbon de bois, sucre et acide phosphorique (ce qui constitue "la semence de charbon de bois"), puis on ajoute, pour un volume de mélange, de 10 à 100 volumes de tourbe ou compost en maintenant une humidité constante afin d'obtenir le sol conforme à l'invention.

Le charbon de bois servant au mélange peut être d'origine industrielle.

Par sucre, on entend au sens de l'invention, des hexoses (ou monosaccharides comprenant 6 atomes de carbones) tels que l'allose, l'altrose, le glucose, le mannose, le gulose, l'idose, le galactose, le talose, le psicose, le fructose, le sorbose ou le tagalose.

De préférence, on utilise le glucose ou le fructose. De façon plus préférentielle, on utilise le glucose.

Plus préférentiellement, on ajoute pour un volume de mélange de charbon de bois, sucre et acide phosphorique, 50 volumes de tourbe ou compost.

De préférence, pour 1000 parties de charbon de bois avant le mélange, on ajoute de 0,4 à 40 parties de sucre. Plus préférentiellement, pour 1000 parties de charbon de bois avant le mélange, on ajoute 4 parties de sucre.

De préférence, pour 1000 parties de charbon de bois avant le mélange, on ajoute de 0,1 à 10 parties d'acide phosphorique, et plus préférentiellement 1 partie d'acide phosphorique.

Dans le procédé de l'invention, on peut laisser macérer au minimum 30 jours en maintenant le mélange de charbon de bois, sucre et acide phosphorique à une humidité constante et une température comprise entre 20°C et 30°C.

De préférence, dans le procédé de l'invention, le taux d'humidité pendant la macération du mélange de charbon de bois, sucre et acide phosphorique se situe environ à 40 %.

De préférence, on laisse macérer la "terra preta", obtenue après mélange de "la semence de charbon de bois" avec la tourbe ou le compost, au minimum 30 jours en maintenant une humidité constante et à une température comprise entre 20°C et 30°C. Plus préférentiellement, le taux d'humidité se situe environ à 40% dans la "terra preta" obtenue en (ii).

Il est possible d'ajouter à cette macération de la "terra preta" du fusi (ou poudre de charbon de bois) qui accélère le processus de fabrication. Ce fusi est ajouté de préférence en des proportions aux alentours de 100 grammes pour 50 litres de mélange final.

Ce sol anthropologique est ensuite utilisable en couche sur du sol pauvre pour augmenter la fertilité de ce sol et éviter un apport d'engrais.

Les exemples suivants illustrent l'invention sans la limiter aucunement.

### Exemple 1 : Procédé de préparation de sol anthropogénique à partir de "semence de charbon de bois"

On prépare du charbon de bois, humidifié à 40% en mélangeant 1 gramme d'acide phosphorique et 4 grammes de sucre pour un kilogramme de charbon de bois. On laisse ensuite à une température comprise entre 20 et 30 °C pendant 30 jours.

Cette « semence » de charbon de bois constitue le point de départ de la fabrication de "terra preta". Elle est indispensable pour amorcer les changements biologiques et biochimiques à l'intérieur des pores du charbon de bois.

On mélange ensuite 1 kilogramme de cette semence de charbon de bois ainsi préparée avec 50 litres de tourbe ou de compost. On humidifie à coeur pendant 30 jours à la température de 20 à 30 degrés.

Une couche de 4 à 5 cm sur le sol suffit pour lancer la culture et la régénération du sol.

## Revendications

1. Procédé de préparation de sol anthropogénique dit "terra preta" comportant les étapes suivantes :
i) on procède au mélange de charbon de bois, sucre et acide phosphorique
ii) on ajoute, pour un volume de mélange, de 10 à 100 volumes de tourbe ou compost en maintenant une humidité constante.

2. Procédé selon la revendication 1, dans lequel pour 1000 parties de charbon de bois de l'étape (i) on ajoute de 0,4 à 40 parties de sucre.

3. Procédé selon la revendication 1 ou 2, dans lequel pour 1000 parties de charbon de bois de l'étape (i) on ajoute de 0,1 à 10 parties d'acide phosphorique.

4. Procédé selon l'une quelconque des revendications 1 à 3, dans lequel on ajoute pour un volume de mélange obtenu à l'étape (i), 50 volumes de tourbe ou compost.

5. Procédé selon l'une quelconque des revendications 1 à 4, dans lequel pour 1000 parties de charbon de bois de l'étape (i) on ajoute 4 parties de sucre.

6. Procédé selon l'une quelconque des revendications 1 à 5, dans lequel pour 1000 parties de charbon de bois de l'étape (i) on ajoute 1 partie d'acide phosphorique.

7. Procédé selon l'une quelconque des revendications 1 à 6, dans laquelle le sucre est un hexose.

8. Procédé selon la revendication 7, dans laquelle l'hexose est un glucose.

9. Procédé selon ,l'une quelconque des revendications 1 à 8, dans lequel on laisse macérer au minimum 30 jours en maintenant le mélange obtenu en (i) à une humidité constante et une température comprise entre 20°C et 30°C

10. Procédé selon l'une quelconque des revendications 1 à 9, dans lequel le taux d'humidité se situe environ à 40 % dans le mélange obtenu en (i).

11. Procédé selon l'une quelconque des revendications 1 à 10, dans lequel on laisse macérer la "terra preta" obtenue en (ii) au minimum 30 jours en maintenant une humidité constante et à une température comprise entre 20°C et 30°C.

12. Procédé selon la revendication 11, dans lequel le taux d'humidité se situe environ à 40% dans la "terra preta" obtenue en (ii).
